# EUROPEAN PATENT APPLICATION

(11) **EP 2 624 405 A1**
(43) Date of publication of application: **07.08.2013**
(21) Application number: 11829082.4
(22) Date of filing: 27.09.2011
(51) Int. Cl.: H02J 3/38, H02J 3/00, H02M 7/48

(54) **SYSTEM CONNECTION DEVICE AND SYSTEM CONNECTION SYSTEM**

(30) Priority: 28.09.2010 JP 2010217890
(71) Applicant: Sanyo Electric Co., Ltd., Osaka 570-8677 (JP)
(72) Inventor: ITOH Kazuo, Moriguchi City Osaka 570-8677 (JP); MAKINO Masahiro, Moriguchi City Osaka 570-8677 (JP); HORIO Wataru, Moriguchi City Osaka 570-8677 (JP)
(74) Representative: Glawe, Delfs, Moll
(86) International application number: PCT/JP2011/071994
(87) International publication number: WO 2012/043529

(57) **Abstract**

The present invention is a grid connecting device which connects to an electrical grid, and outputs power generated by a connected dispersed power source to the electrical grid. This grid connecting device includes a receiving unit for receiving from the outside information for responding to a voltage sag which specifies an area in which a voltage sag is likely to occur. This grid connecting device performs a predetermined operation to respond to a voltage sag when the area in which the grid connecting device is used is the area specified by the received voltage sag response information.

## Description

### FIELD OF THE INVENTION

The present invention relates to a grid connecting device for outputting electric power obtained from a dispersed power source to the connected electrical grid (power distribution system) and to a grid connecting system including this grid connecting device.

### BACKGROUND OF THE INVENTION

A inverter (grid connecting device) is often used which connects to an alternating-current electrical grid and outputs power generated by a dispersed power source (such as photovoltaic cells for household use) to the electrical grid.

A inverter has functions for connecting to the electrical grid, converting the direct-current electric power generated by the dispersed power source to alternating-current electric power, and outputting the alternating-current electric power to the electrical grid. Usually, the waveform, etc. of the voltage outputted from the inverter to the electrical grid is adjusted in order to match that of the electrical grid and not disrupt the power state of the electrical grid.

When a inverter is used, it is necessary to pay attention to the stand-alone operating state (the independent operating state of the electrical grid). The dispersed power source continues to supply power in the stand-alone power state when the electrical grid is experiencing a blackout. From the standpoint of safety, the stand-alone operating state should be avoided as much as possible. Also, the inverter requires a means of disconnecting from the electrical grid when the dispersed power source is operating in the stand-alone operating state.

Therefore, a power condition is equipped with a means for detecting the stand-alone operating state (a means for determining whether or not the dispersed power source is operating in the stand-alone operating state), and disconnecting from the electrical grid when the stand-alone operating state occurs. Means for detecting the stand-alone operating state generally include those using a passive detection method (detecting electrical fluctuations in the electrical grid caused by stand-alone operation) and those using an active detection method (when an active change volume in the electrical grid will increase , the changing state volume of electrical grid will follow the active change volume or not..

A method (trigger method) has been investigated as one technique for detecting stand-alone operation in which the electrical grid is monitored for the occurrence of electrical fluctuations exceeding a reference level and, when such an electrical fluctuation occurs (that is, when stand-alone operation is suspected), it is determined whether or not stand-alone operation has occurred. The trigger method is an active detection method in that stand-alone operation is detected by using the occurrence of electrical fluctuations exceeding a reference level as the trigger (for beginning the process of detecting whether stand-alone operation is occurring).

The trigger method has its advantages as an active detection method because of high detection precision, and because active fluctuations (small changes in frequency, etc.) are simply applied to the electrical grid when there is a suspicion of stand-alone operation. As a result, the power conversion device used in the trigger method does not disrupt the power state of the electrical grid more than necessary, and power is conserved.

As mentioned above, stand-alone operation is detected by detecting an unusual power state in the electrical grid. Unusual power states in the electrical grid include power outages and momentary dips in voltage (including brief power outages in which the residual voltage falls to 0%; these dips are referred to as "voltage sags" in the present application).

When a power outage occurs, as mentioned above, means are required to disconnect the inverter from the electrical grid which would eliminate stand-alone operation. However, unlike a power outage, when a voltage sag occurs, the inverter does not have to be disconnected in order to recover from an abnormal power state in a very short period of time. Frequent disconnection of the inverter should be avoided from the standpoint of the safety of the electrical grid. Therefore, the inverter should not be disconnected from the electrical grid when a voltage sag occurs.

In the provisions for conventional inverters, the inverter determines whether or not an unusual power state in the electrical grid was caused by a voltage sag, and decides based on the results whether to disconnect. This process takes place over a relatively long period of time (several seconds) after the abnormality has occurred in the electrical grid. As a result, it is relatively easy to disconnect the inverter from the electrical grid when an ordinary power outage occurs and to keep the inverter connected to the electrical grid when a voltage sag occurs.

In Patent Document 1, the electrical charge of the smoothing capacitor installed in the output stage is used to prevent malfunctions such as not detecting brief power outages.

### Prior Art Documents

### Patent Documents

Patent Document 1: Laid-Open Patent Publication No. 2009-153338

### Summary of the Invention

### Problem to be Solved by the Invention

However, the number of dispersed power sources connected to the electrical grid via a inverter has rapidly increased in recent years, and the operating state of these power conditions has a significant effect on the electrical grid. For example, regardless of whether or not a normal power outage has occurred, when a large number of inverters do not disconnect and continue to operate in stand-alone manner, the result is a huge safety problem.

As a result, the provisions for inverters will be amended to mandate that inverters be rapidly disconnected from the electrical grid (for example, within one second) when stand-alone operation occurs in response to an ordinary power outage. Therefore, there is strong demand for inverters that detect the occurrence of stand-alone operation in a very short period of time, and immediately disconnect from the electrical grid when stand-alone operation is detected.

However, when an abnormality occurs in the power state of the electrical grid, it is difficult to determine whether the abnormality was caused by a voltage sag. For example, when the time allotted for determining whether or not stand-alone operation has occurred (the determination time) is very short, the duration of a voltage sag may be equal to or greater than the determination time, and it may be difficult in this case to differentiate the voltage sag from a normal outage.

As a result, a determination may be made that stand-alone operation has occurred due to a power outage, even though there has only been a voltage sag. This may cause the inverter to be frequently disconnected from the electrical grid. When a large number of inverters is disconnected from the electrical grid all at once due to a voltage sag, the electrical grid may become very unstable.

As a result, there may be a desire to extend the determination time in order to avoid inverter disconnections due to voltage sags. When the determination time is extended across the board regardless of conditions, inverters may be more likely to not quickly disconnect from the electrical grid when stand-alone operation has occurred.

Therefore, if the determination time is to be extended only to cover conditions under which voltage sags are likely to occur, then inverter disconnections due to voltage sags should be avoided as much as possible while also disconnecting as quickly as possible when stand-alone operation occurs. Therefore, operations in which the determination time is extended can be regarded as one response to voltage sags (voltage sag response operation). Other voltage sag response operations should be performed so as to cover conditions under which voltage sags are likely to occur.

In view of the circumstances described above, a inverter is desired which acquires information indicating whether or not a voltage sag is likely to occur, and executes a voltage sag response operation in response to this information. In the case of the technique disclosed in Patent Document 1, it is possible that a voltage sag will not be treated as a power outage, and the determination time for stand-alone operation is easily extended regardless of whether or not a voltage sag is likely to occur. However it is not realistic to combine altering the destination time with a change in the capacity of the smoothing capacitor each time the provisions for inverters are amended.

In light of this problem, a purpose of the present invention is to provide a grid connecting device able to acquire information indicating whether or not a voltage sag is likely to occur, and execute a voltage sag response operation in response to this information. Another purpose of the present invention is to provide a grid connecting system using this grid connecting device.

### Means of Solving the Problem

The present invention is a grid connecting device connecting to an electrical grid, and outputting power generated by a connected dispersed power source to the electrical grid. This grid connecting device includes a receiving unit for receiving, from the outside, voltage sag response information specifying an area susceptible to a voltage sag, and the grid connecting device performs a predetermined operation to respond to a voltage sag when the area in which the grid connecting device is used is the area specified by the received voltage sag response information.

The causes of voltage sags include switching operations in power supply routes performed by power companies (the area and time period in which the electrical grid will be affected are determined in the planning stage) and electrical storms (the area and time period can be predicted from weather reports), so an area in which a voltage sag will occur is often known (or can be predicted) in advance. Therefore, voltage sag response information specifying the area in which a voltage sag is likely to occur can be generated and distributed via various means (a grid management device is used to distribute the information in the embodiment described below).

A system connecting device with the configuration described above can acquire information indicating the likelihood of a voltage sag as voltage sag response information, and use this information to perform a voltage sag response operation. The voltage sag response operation can be any operation responding to a voltage sag, and the operation is not limited to the specific examples described below.

### Effect of the Invention

As mentioned above, the present invention is a system connecting device which is able to acquire information indicating the likelihood of a voltage sag as voltage sag response information, and to use this information to perform a voltage sag response operation.

### BRIEF DESCRIPTION OF THE DRAWINGS

FIG. 1 is a configuration diagram of a power transmission system including the grid connecting system in an embodiment of the present invention.
FIG. 2 is a diagram used to explain the arrangement of the inverter, dispersed power source, and load in an embodiment of the present invention.
FIG. 3 is a diagram used to explain voltage sag response information.
FIG. 4 is a configuration diagram of the connection control circuit in an embodiment of the present invention.
FIG. 5 is a diagram used to explain the stored information for a inverter in an embodiment of the present invention.
FIG. 6 is a flowchart of the connection control operations.

### DETAILED DESCRIPTION OF THE INVENTION

The following is an explanation of the grid connecting system in an embodiment of the present invention which has a grid management device and a inverter.

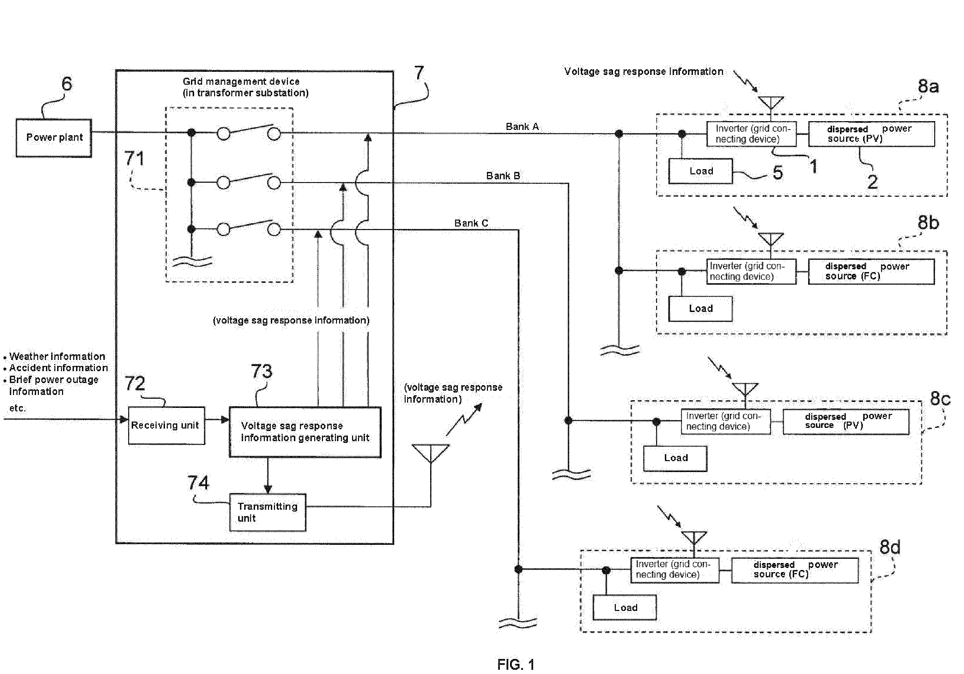

FIG. 1 is a configuration diagram of a power transmission system including the grid connecting system in an embodiment of the present invention. As shown in the figure, the power transmission system includes inverters 1, dispersed power sources 2, loads 5, a power plant (electrical grid) 6, and a grid management device 7.

As shown in the figure, each household consumer (indicated by 8a through 8d in FIG. 1) includes a inverter 1, a dispersed power source 2, and a load 5, and is connected to a bank dispersed power to the consumer (these are indicated by banks A through C in FIG. 1 and corresponds to the electric grid as viewed from the customer side). There are different types of dispersed power source 2, including photovoltaic cells (PV), fuel cells (FC), and gas turbine generators.

### [Configuration of Grid Management Device]

The grid management device 7 is installed inside a transformer substation, and properly distributes commercial power from the power plant 6, and provides the voltage sag response information described below. The grid management device 7 includes a switch 71, a receiving unit 72, a voltage sag response information generating unit 73, and a transmitting unit 74.

The switch 71 switches the power supply of each bank. When the switch 71 is closed, electric power is supplied from the power plant 6 to the corresponding bank. When the switch is open, power is no longer supplied. The switch 71 is usually closed, but can be opened when appropriate, for example, in accordance with a predetermined power outage schedule (a planned date and time for a power outage in order to switch power supply routes).

The receiving unit 72 receives different types of information such as weather information, accident information, and brief power outage information (information on the area and period of time in which a brief power outage is likely to occur). This information is sent when required by the authorities managing this information. The received information is sent to the power sag response information generating unit 73.

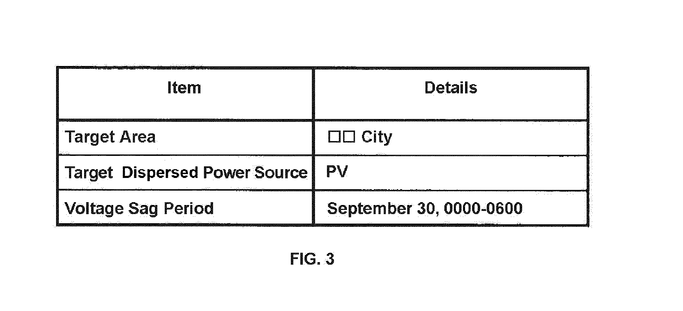

The voltage sag response information generating unit 73 generates voltage sag response information based on the type of information sent by the receiving unit 72 or entered by an operator. Voltage sag response information is used by some or all of the inverters 1 to perform the voltage sag response operation described below. As shown in FIG. 3, this information includes items such as "target area," "target dispersed power source," and "voltage sag period."

The "target area" information indicates whether a voltage sag response operation should be executed by the inverters 1 in a given area. The "area" can be a bank, or a geographic area (city, ward, town, village, etc.). It may also indicate the power supply company with jurisdiction over the connected electrical grid. There are no particular restrictions. Various other categories can be used if necessary.

The "target dispersed power source" indicates whether a voltage sag response operation should be executed by the inverters 1 connected to a given type of dispersed power source. The voltage sag period indicates the period of time in which a voltage sag is likely to occur. For example, the voltage sag response information shown in FIG. 3 indicates that a voltage sag response operation is to be performed "from 12 AM to 6 AM on September 30th" by inverters 1 "in the city of xx that are connected to photovoltaic cell (PV) dispersed power sources."

Different methods can be used to generate voltage sag response information based on this information, and various formats can be used. For example, when weather information indicates that "an electrical storm is likely to occur in the city of ×× between 3 PM and 6 PM on October 3rd (that is, brief power outage is more likely because of the electrical storm)," voltage sag response information may be generated in which the "target area" is the "city of ××", and the "voltage sag time" is "3 PM to 6 PM on October 3rd."

When a planned power outage schedule indicates the likelihood of a brief power outage from 12 AM to 3 AM on October 4th in banks A and B, voltage sag response information may be generated in which the "target area" is "banks A and B," and the "voltage sag response period" is "12 AM to 3 AM on October 4th."

The voltage sag response information generating unit 73 sends the voltage sag response information to the transmitting unit 74, and voltage sag response information signals (modulated voltage signals) are sent to the electrical grid connected to each consumer. In this way, voltage sag response information is distributed to each inverter 1 via the power line communication network.

The transmitting unit 74 may also send the voltage sag response information received from the voltage sag response information generating unit 73 to each inverter 1 in the data region of a terrestrial digital broadcast. In this way, voltage sag response information is distributed not only via the power line communication network but via two different transmission routes including terrestrial digital broadcast.

Other transmission routes may be used to distribute voltage sag response information, including other types of television broadcasting (analog, BS, CS, CATV, etc.), radio broadcasting, and other types of wired broadcasting. Data for distributing voltage sag response information can also be sent to a broadcast station as emergency (lifeline) information or local information, and the broadcast station can distribute the voltage sag response information via a broadcast. The voltage sag response information may be added to emergency information or local information in the radio clock data and then distributed. Voltage sag response information can also be distributed via the internet. Also, one or more (for example, three or more) different transmission routes can be used to distribute the voltage sag response information.

The voltage sag response information can use any format to indicate the voltage sag response period. For example, the distribution of voltage sag response information prior to the voltage sag response period may be agreed to by the grid management device 7 and a inverter 1. This allows the start time for the voltage sag response period to be removed from the voltage sag response information. Also, if there is an agreement to continuously distribute voltage sag response information during the voltage sag response period, the voltage sag response period can be removed from the voltage sag response information.

If necessary, items other than those described above can be added to the voltage sag response information. For example, an item can be added specifying the format (pattern) of the voltage sag response operation. For example, information indicating "continuous operation during a voltage sag" can be included in the voltage sag response information. Many different patterns can be prepared for voltage sag response operations, and a different pattern for the voltage sag response operation can be sent to each inverter 1 based on a decision made by the grid management device 7.

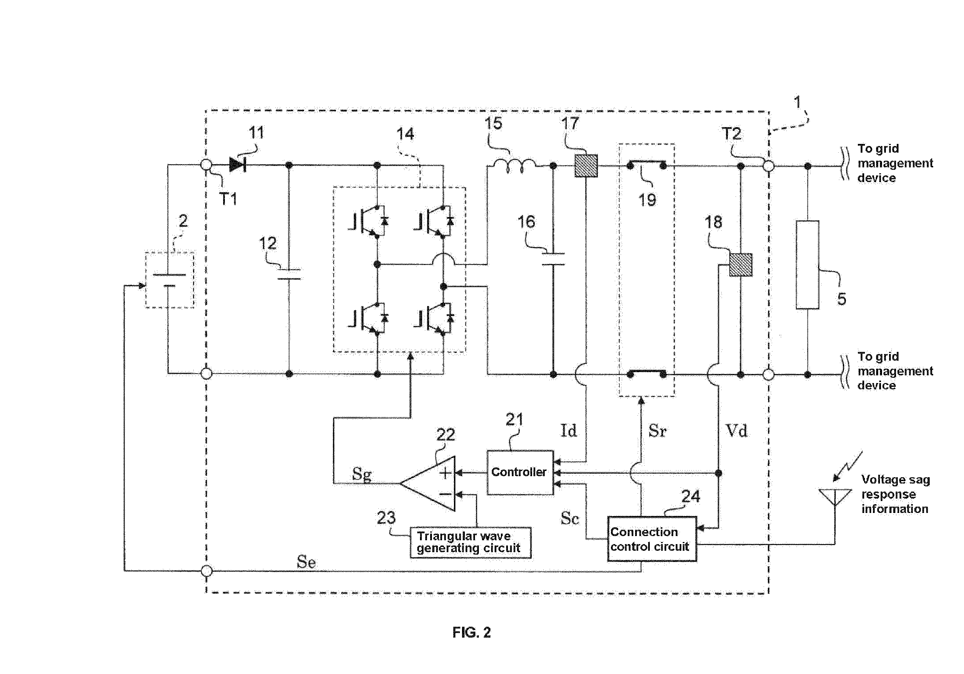

FIG. 2 is a diagram used to explain the arrangement of the inverter 1, dispersed power source 2, and load 5 in an embodiment of the present invention. As shown in the figure, the inverter 1 has terminal T1 and terminal T2. The dispersed power source 2 is connected to terminal T1, and the existing electrical grid is connected to terminal T2. The load 5 (various electrical devices, etc.) receiving power from the electrical grid is also connected to the grid. When the dispersed power source 2 is a fuel cell (FC) or gas turbine generator, the dispersed power source 2 stops generating power when a stop signal Se is received from the inverter 1.

### [Configuration of Inverter]

The following is an explanation of the configuration of the inverter 1. The inverter 1 shown in FIG. 2 has a diode 11, a capacitor 12, an inverter circuit 14, an inductor 15, a capacitor 16, a current detecting circuit 17, a voltage detecting circuit 18, a connection relay 19, a controller 21, a PWM comparator 22, a triangular wave generating circuit 23, and a connection control circuit 24.

The state of the power from the dispersed power source 2 is adjusted by each element (11, 12) and delivered to the inverter circuit 14. The inverter circuit 14 converts the received power to alternating-current power, and supplies the power to the next stage. The inverter circuit 14 operates based on gate signals Sg received from the PWM comparator 22. The waveform of the power sent from the inverter circuit 14 is adjusted by the inductor 15 and the capacitor 16, and the adjusted power is outputted via the connection relay 19 to the electrical grid.

The connection relay 19 is opened and closed in response to relay switching signals Sr received from the connection control circuit 24. The connection relay 19 is usually closed and the inverter 1 connected to the electrical grid. However, it is disconnected when the connection relay 19 is opened.

The current detecting circuit 17 continuously detects the value of the current flowing through terminal T2. Information on the current value detected by the current detecting circuit 17 is sent to the controller 21 as current detection signals Id.

The voltage detecting circuit 18 continuously detects the value of the voltage between the poles of terminal T2. Information on the voltage value detected by the voltage detecting circuit 18 is sent to the controller 21 and the connection control circuit 24 as voltage detection signals Vd.

The controller 21 receives the current detection signals Id, the voltage detection signals Vd, and change applying signals Sc (to be described in detail below). The controller 21 synthesizes these signals and outputs the resulting signals to the PWM comparator 22 as signals indicating the inverter level.

In the PWM comparator 22, the output from the controller 21 is inputted to a noninverting input terminal, and the reference triangular wave signals generated by the triangular wave generating circuit 23 are inputted to the inverting input terminal. The PWM comparator 22 outputs the signals corresponding to the results of the comparison to the inverter circuit 14 as gate signals Sg.

The connection control circuit 24 receives the voltage detection signals Vd and the voltage sag response information distributed by the grid management device 7, and performs various operations related to opening and closing the connection relay 19. The following is a more detailed explanation of the configuration of the connection control circuit 24.

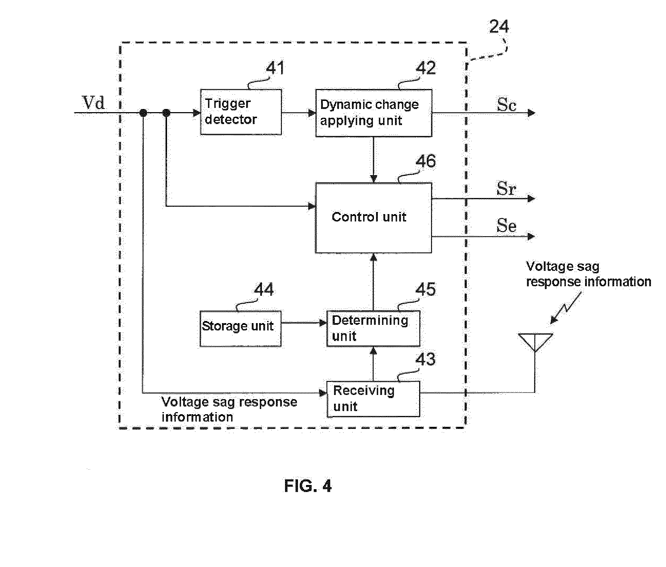

FIG. 4 is a configuration diagram of the connection control circuit 24. As shown in this figure, the connection control circuit 24 includes a trigger detector 41, a dynamic change applying unit 42, a receiving unit 43, a storage unit 44, a determining unit 45, and a control unit 46.

The trigger detector 41 continuously monitors electrical fluctuations in the electrical grid, and detects a trigger (starting the detection process for stand-alone operation) based on these electrical fluctuations. The operation of the trigger detector 41 will now be explained in greater detail.

The trigger detector 41 generates signals indicating the power state (especially the stage of the voltage waveform) of the electrical grid based on the inputted voltage detection signals Vd. The voltage state item can be the frequency, phase, amplitude, and harmonics amplitude (for example, the third, fifth and seventh harmonics) of the alternating-current voltage in the electrical grid. Signals may be generated for one or more of these items.

The trigger detector 41 calculates the amount of change in the power state based on the generated signals. The amount of change is calculated by calculating the difference between a momentary value and the average value of the movement. In this way, the amount of change from the average value of movement is calculated. Other methods can be used to calculate the amount of movement. There are no limitations on the method. For example, instead of the momentary value, the average of momentary values over a recent number of iterations may be used. Instead of the average value of movement, a predetermined reference value (fixed value) can be used.

Next, the trigger detector 41 compares the results of the amount of movement calculation to a predetermined determination threshold value. The determination threshold value is a value which suggests the occurrence of stand-alone operation when the electrical fluctuation in the electrical grid exceeds it. When the calculation result is the larger value in the comparison, the trigger detector 41 uses this as a trigger. The detection result is then sent to the dynamic change applying unit 42.

When the amount of change is calculated for each of a plurality of items, each calculation result is compared to the determination threshold value established for each item. When the calculation result is the greater value in one or more of the items, a trigger is detected.

The dynamic change applying unit 42 switches the change applying signal Sc outputted to the controller 21 from the L level (zero level) to the H level when a trigger is detected by the trigger detector 41. The change applying signal Sc, as described in greater detail below, is a signal used to apply a dynamic change to the power state of the electrical grid. The specific value of the H level is established to apply a sufficiently large dynamic change. The dynamic change applying unit 42 notifies the controller 46 when an H-level change applying signal Sc has been outputted.

The receiving unit 43 receives voltage sag response information from the grid management device 7, and sends the information to the determining unit 45. As mentioned earlier, the voltage sag response information is distributed via different transmission routes. The receiving unit 43 receives the voltage sag response information via all of these transmission routes.

The receiving unit 43, for example, analyzes the voltage detection signals Vd, receives the voltage sag response information via the power line communication network, and also receives the voltage sag response information included in the data area of a terrestrial digital broadcast. In this way, reception loss for any reason can be minimized, and the receiving unit 43 can reliably receive voltage sag response information.

When the receiving unit 43 has received voltage sag response information via any transmission route, it can check to determine whether the voltage sag response information has been received via the rest of the transmission routes. When the information has not been received (or received within a predetermined standby time), a reception error may be sent to the user of the inverter 1 via the transmission routes. In this way, the user can be notified of a problem with a transmission route and encouraged to get it repaired.

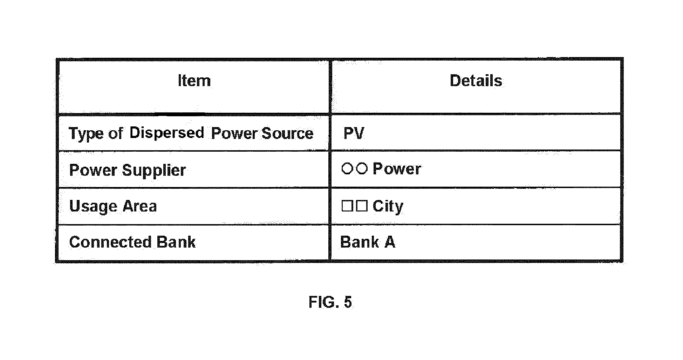

The storage unit 44 stores each type of information related to usage of the device (inverter 1). More specifically, as shown in FIG. 5, the storage unit 44 stores information such as the "type of dispersed power source," the "power supplier," the "usage area," and the "connected bank." The "type of dispersed power source" indicates the type of dispersed power source connected to the inverter 1. The "power supplier" indicates the company with jurisdiction over the electrical grid connected to the inverter 1. The "usage area" indicates the area in which the inverter 1 is used (the position in the electrical grid at which it has been connected). The "connection bank" indicates which bank in the electrical grid to which the inverter 1 has been connected. This information is entered by an operator at the power company or by the user of the inverter 1.

The determining unit 45 determines whether or not the current time is within the voltage sag response period based on the information stored in the storage unit 44 and the voltage sag response information. More specifically, it determines whether conditions have been satisfied, such as whether the "geographic area" of the device (or the "power supplier," or the "usage area," or the "connection bank") belongs to the "geographic area" indicated in the voltage sag response information, and whether the "type of dispersed power source" connected to the device is among the dispersed power sources indicated in the voltage sag response information.

When the conditions have been satisfied (that is, the voltage sag response information corresponds to the device) and the current time is within the "voltage sag response period" in the voltage sag response information, it is determined that the current time is within the voltage sag response period. This determination is performed continuously, and the results are sent to the control unit 46. In this way, the control unit 46 can determine whether the current time is within the voltage sag response time.

The control unit 46 controls the connection relay 19 and the dispersed power source 2 based on the voltage detection signals Vd and the information provided by the dynamic change applying unit 42 and the determining unit 45. These controls will be explained in greater detail below.

### [Operation of the Inverter]

The following is an explanation of the main operations performed by the inverter 1. The basic operations of the inverter 1 are to continuously adjust the power from the dispersed power source 2 and output the adjusted power to the electrical grid.

The power state detected here has to comply with predetermined connection provisions. In other words, the distortion factor and power factor of the outputted harmonic voltage has to fall within a prescribed range, and the waveform of the outputted current has to be a sinusoidal wave. In order not to disrupt the power state of the electrical grid, the state of the outputted power has to substantially match the state of the power in the electrical grid (that is, in terms of the alternating-current frequency, phase, voltage amplitude, etc.).

The controller 21, the PWM comparator 22 and the triangular wave generating circuit 23 work together to generate gate signals Sg based on the current detection signals Id and the voltage detection signals Vd which satisfy these conditions while taking into account the fall in voltage due to the current and the voltage state of the electrical grid.

The inverter 1 controls the inverter circuit 14 using the pulse width modulation (PWM) method to properly adjust the power sent from the dispersed power source 2. During normal operations, the change applying signals Sc are at the L level (zero level). This has no effect on the power adjustment.

### [Connection Control Operations]

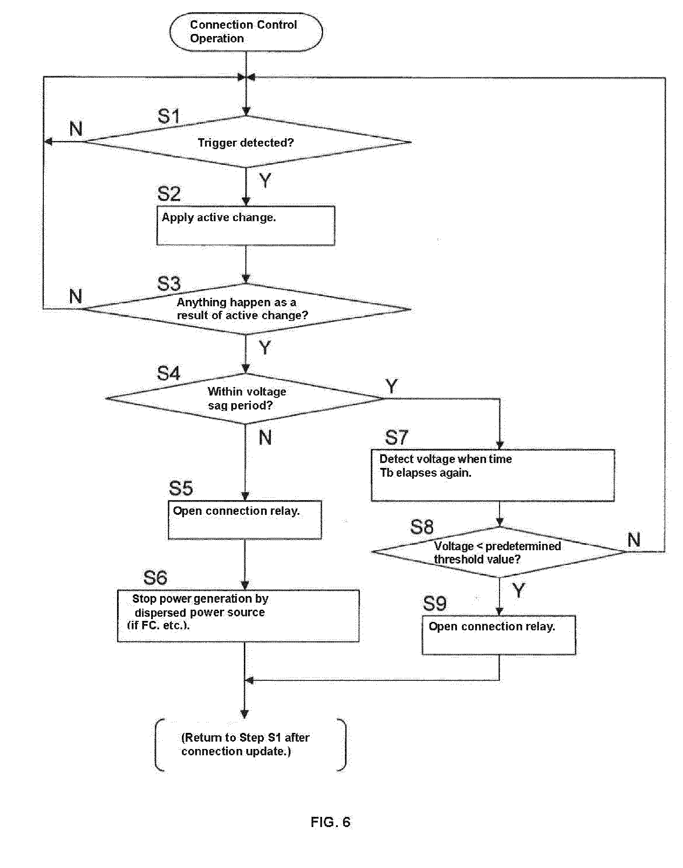

When stand-alone operation occurs, the dispersed power source 2 has to be disconnected from the electrical grid. The inverter 1 executes the basic operations described above in parallel to determine whether or not stand-alone operation has occurred and, if necessary, to disconnect from the electrical grid (connection control operation). The following is an explanation of the connection control operation with reference to the flowchart shown in FIG. 6.

As mentioned above, the trigger detector 41 continuously monitors for the occurrence of a trigger based on electrical fluctuations in the electrical grid (Step S1). When the trigger detector 41 has detected a trigger (Step S1: Y), the dynamic change applying unit 42 outputs H-level change applying signals Sc to the controller 21. The controller 21 adds the H-level change applying signals Sc to the current detection signals Id and the voltage detection signals Vd, and synthesizes signals indicating the inverter level.

Therefore, the power outputted to the electrical grid from the inverter 1 goes from matching the power state of the electrical grid to exceeding the stage by an amount corresponding to the dynamic fluctuation. As a result, a dynamic fluctuation is applied to the power state of the electrical grid (Step S2). The time period in which the change applying signal Sc is maintained at the H level, that is, the time period in which the dynamic fluctuation is applied, is established so as to equal or exceed time period Ta described below.

At this time, the control unit 46 monitors the power state of the electrical grid based on the voltage detection signals Vd. When a predetermined amount of time Ta (for example, 0.3 seconds) has elapsed since the start of the dynamic change application, it is determined whether or not the power state has been affected by the dynamic change (Step S3). Because the determination technique is in accordance with the technique for detecting stand-alone operation using the active detection method of the prior art, further explanation has been omitted.

When the power state has not been affected by the dynamic fluctuation (Step S3: N), the control unit 46 determines that stand-alone operation has not occurred. At this time, the operation in Step S 1 is repeated.

When the power state has been affected by the dynamic fluctuation (Step S3: Y), the control unit 46 performs the different operations to determine whether or not the current time is within the voltage sag response period (that is, whether or not the current time is within a time period in which a voltage sag is likely to occur) (Step S4). In other words, when the current time is not within the voltage sag response period (Step S4: N), the control unit 46 determines that stand-alone operation has occurred, and outputs a relay switching signal Sr to open the connection relay 19 (Step S5). When the type of dispersed power source 2 connected to the device is a fuel cell (FC) or gas turbine generator, a stop signal Se is outputted to stop the generation of power by the dispersed power source 2 (Step S6).

When the current time is within the voltage sag response period (Step S4: Y), the control unit 46 does not immediately determine whether stand-alone operation has occurred. Instead, it detects the voltage of the electrical grid after a predetermined period of time Tb (for example, 0.2 seconds) has elapsed (Step S7). The control unit 46 then determines whether or not the detected voltage has fallen below a predetermined threshold value (the threshold value for determining whether or not stand-alone operation has occurred) (Step S8).

As a result, when the detected voltage has not fallen below the predetermined threshold value (Step S8: N), the determination result in Step S3 is determined to have been caused by a voltage sag (that is, stand-alone operation did not occur because of a normal outage). In this case, the connection relay 19 is not opened, and the operation in Step S 1 is repeated.

However, when the detected voltage is lower than the predetermined threshold value (Step S8: Y), that is, when the voltage of the electrical grid continues to be abnormal after period of time Tb has elapsed, it is determined that stand-alone operation has occurred because of a normal power outage. The control unit 46 then outputs a relay switching signal Sr to open the connection relay 19 (Step S9).

However, even when such a determination has been made, the determination results in Step S3 may be caused by a voltage sag (especially when the duration is greater than the sum of Ta and Tb). Because it is within the voltage sag response period, the possibility of such a voltage sag occurring is relatively high. A fuel cell (FC) or gas turbine generator is likely to deteriorate when suddenly stopped and restarted, and a relatively long time is required from startup to the beginning of output. The control unit 46 must not execute the operation in Step S6 (output a stop signal Se to stop the generation of power by the dispersed power source 2).

In other words, the inverter 1 disconnects from the electrical grid and stops the output of power to the electrical grid, but continues to generate power with the dispersed power source 2. At this time, the electric power generated by the dispersed power source 2 is directed to a separate heater, etc. prepared beforehand. After the operation in Step S6 or Step S9 has been performed, for example, after it has been confirmed that stand-alone operation has been cancelled, the connection is restored and the operation in Step S 1 is repeated.

As mentioned above, a portion of the series of connection control operations is to perform a predetermined voltage sag response operation when it has been determined that the current time is within the voltage sag response period. More specifically, when certain conditions have been satisfied such as the power state of the electrical grid being affected by a dynamic change (Step S3: Y), the connection relay is not opened (the electrical grid is not disconnected) and this operation is performed as a voltage sag response operation.

When a voltage sag has occurred with a duration equal to or greater than period Ta, if it is outside of the voltage sag response period, it is determined without exception that a stand-alone operation has occurred, and the connection relay 19 is opened (Step S5). If it is within the voltage sag response period, the connection relay 19 is not opened. This avoids a situation in which the inverter 1 is frequently disconnected due to voltage sags. As a result, a large number of inverters 1 are kept from being disconnected all at once in a power transmission system.

When the voltage of the electrical grid has been detected after period Tb has elapsed since the conditions were satisfied and the voltage is lower than the predetermined threshold value, the connection relay is opened (the electrical grid is disconnected) as a voltage sag response operation. In this way, the inverter 1 can be disconnected from the electrical grid and stand-alone operation cancelled when a normal power outage occurs even within the voltage sag response period.

From the standpoint of the time required to determine whether stand-alone operation has occurred, the determination time is time Ta, and the determination time within the voltage sag response period is the sum of times Ta and Tb. Thus, outside of the voltage sag response period (that is, during normal operation), rapid detection of a stand-alone operating state is emphasized. Inside the voltage sag response period (that is, during a period in which a voltage sag is likely to occur), accurate differentiation between a normal power outage and a voltage sag is emphasized.

When the inverter 1 has disconnected the electrical grid and the type of dispersed power source 2 connected to the device is a fuel cell (FC) or gas turbine generator, the generation of power by the dispersed power source 2 is stopped (stopping process) (Step S6). However, the inverter 1 does not perform the stopping process within the voltage sag response period as a voltage sag response operation.

Thus, the fuel cell (FC) or gas turbine generator does not have to be started when voltage drops are frequent (especially when the duration is longer than the sum of times Ta and Tb), and the normal connected state can be quickly restored (immediately recover when power is restored). In this way, deterioration of fuel cells (FC) and gas turbine generators due to sudden stopping can be minimized.

In the present embodiment, stand-alone operation is detected using the trigger method described above outside of the voltage sag response period. However, the present invention is not limited to this embodiment. The passive detection method or the active detection method explained above can be used, or another method can be used.

### [Other]

In the grid connecting system of the present embodiment, as explained above, voltage sag response information generated by the grid management device 7 is distributed to each inverter 1, and the inverters 1 receive this information. In response to the voltage sag response information, the inverters 1 perform voltage sag response operations to reduce problems caused by voltage sags.

The grid management device 7 generates voltage sag response information specific to each inverter 1, and generates voltage sag response information including information specifying geographic areas, etc. However, the same voltage sag response information is sent (broadcast) to all of the inverters 1. Each inverter 1 (receiver) determines which voltage sag response information pertains to itself, and performs the voltage sag response operation if necessary.

In this way, one-on-one communication means between the grid management device 7 (distributor) and each inverter 1 is not required, and the processing load required to generate and distribute voltage sag response information can be minimized. Even when the number of inverters 1 receiving voltage sag response information increases, the information distribution format does not become more complicated, and distribution loss in voltage sag response information can be avoided.

The "dispersed power source" item in the voltage sag response information can be determined based on a variety of policies. Examples of policies include: (1) executing the voltage sag response operation in a inverter 1 regardless of the type of dispersed power source that the device is connected to; (2) executing the voltage sag response operation in a inverter 1 only when connected to a dispersed power source in which reverse power flow is possible (PV, etc.); and (3) executing the voltage sag response operation in a inverter 1 only when connected to a dispersed power source with safe output (regardless of the weather; such as a FC or gas turbine generator).

When based on policy (1), the "dispersed power source" in the voltage sag response information can be any type of dispersed power source (none excluded). In policy (1), the voltage sag response operation is to be executed by as many inverters 1 as possible.

When based on policy (2), the "dispersed power source" in the voltage sag response information can be a photovoltaic (PV) cell (the types without reverse power flow are excluded). As many dispersed power sources with reversible power flow as possible have to be excluded because a large number disconnected all at once due to a voltage sag may suddenly throw off the power balance in the electrical grid. Policy (2) is able to achieve this.

When based on policy (3), the dispersed power source in the voltage sag response information is a fuel cell (FC) or gas turbine generator (excluding types with unstable output). The output from photovoltaic (PV) cells decreases when there are frequent voltage sags due to electrical storms because the amount of sunlight is reduced by storm clouds. As a result, the impact on the electrical grid is probably small even when all photovoltaic (PV) cells in the area are disconnected. However, a large number of dispersed power sources with stable output may cause a sudden decrease in the voltage of the electrical grid if disconnected all at once at the rated output, even when the dispersed power sources do not have reversible power flow. As a result, this is to be avoided as much as possible. Policy (3) is able to achieve this.

As explained above, the inverter 1 in the present embodiment is a device which is connected to the electrical grid to output power generated by the connected dispersed power source 2 to the electrical grid. This device receives voltage sag response information from the outside. This voltage sag response information is information specifying an area in which a voltage sag is likely to occur (target area), the time period (voltage sag response period), and type of dispersed power source (target dispersed power source).

When the area specified in the received voltage sag response information is the same area in which the device is located (or when the "power supplier", "usage area," or "connection bank" are the same), the inverter 1 performs a predetermined voltage sag response operation. As a result, the inverter 1 is able to obtain information indicating the susceptibility to voltage sags as voltage sag response information, and a predetermined voltage sag response operation can be performed in response to this information.

The types of dispersed power sources in the explanation of the present embodiment were photovoltaic (PV) cells, fuel cells (FC), and gas turbine generators. However, the dispersed power sources are not limited to these examples. The dispersed power source can be anything able to output power, such as a secondary battery. The power conversion device was a inverter, but the present invention is not limited to this example. For example, when the dispersed power source outputs alternating-current power such as a gas turbine generator, a power conversion device such as a cyclo-converter or a matrix converter can be used to convert the alternating-current power directly to the desired alternating-current power.

The inverter 1 in the present embodiment was used in a household, but inverters can be used by medium-scale consumers such as stores, apartment buildings, government buildings, and schools. Because inverters 1 are applied to the power supply system at schools in addition to photovoltaic cells, etc., they may contribute to the New Deal School Initiative.

Because of their characteristics, fuel cells (FC) are difficult to start and stop suddenly. When the dispersed power source 2 is a fuel cell (FC), the inverter 1 can perform (1) or (2) below as the voltage sag response operation.
(1) Continue operations without opening the connection relay 19 (without disconnecting from the electrical grid).
(2) Promptly opening the connection relay 19 (prompt disconnection from the electrical grid), and routing the power generated by the fuel cell (FC) to a heater with a water storage tank.

In this way, sudden stop and start of fuel cells (FC) can be prevented.

The inverter 1 preferably disconnects from the electrical grid under conditions (A) and (B) below after voltage sag response information has been acquired and while the voltage sag response operation is being performed.
(A) The inverter 1 has detected stand-alone operation based on something other than a sudden change in voltage or current (the detection method can be passive or active).
(B) The inverter 1 has received instructions from the transformer substation to disconnect (for example, due to transfer blockage).

When (A) or (B) occurs while the voltage sag response operation is being performed, the inverter 1 gives priority to opening the connection relay 19 (disconnecting from the electrical grid). At this time, when the conditions in (A) or (B) are met to open the connection relay 19, the user may throw the switch manually. The connection relay 19 may also be opened when the conditions in both (A) and (B) are met.

The present invention was explained above with reference to an embodiment, but the present invention is not limited to the embodiment. Various modifications may be added to the embodiment without departing from the spirit of the present invention.

### Industrial Applicability

The present invention can be used in a inverter connected to the electrical grid.

### Key to the Figures

1: Inverter (grid connecting device)
2: Dispersed power source
5: Load
6: Power plant
7: Grid management device
8a-8d: Consumers
11: Diode
12: Capacitor
14: Inverter circuit
15: Inductor
16: Capacitor
17: Current detecting circuit
18: Voltage detecting circuit
19: Connection relay
21: Controller
22: PWM Comparator
23: Triangular wave generating circuit
24: Connection control circuit
41: Trigger detector
42: Dynamic change applying unit
43: Receiving unit
44: Storage Unit
45: Determining Unit
46: Control unit
71: Switch
72: Receiving unit
73: Voltage sag response information generating unit
74: Transmitting unit

## Claims

1. A grid connecting device connecting to an electrical grid, and outputting power generated by a connected dispersed power source to the electrical grid,
the grid connecting device comprising a receiving unit for receiving from the outside voltage sag response information specifying an area susceptible to a voltage sag,
the grid connecting device performing a predetermined operation to respond to a voltage sag when the area using the grid connecting device is the area specified by the received voltage sag response information.

2. The grid connecting device according to claim 1, wherein information is received specifying a time period susceptible to a voltage sag as the voltage sag response information, and the time sag response operation is performed in the specified time period,
the grid connecting device further comprising a connection control unit for detecting the power state of the electrical grid and disconnecting from the electrical grid when the detected result satisfies predetermined conditions,
the connection control unit not disconnecting from the electrical grid when the detected result satisfies predetermined conditions as the voltage sag response operation.

3. The grid connecting device according to claim 2, wherein the connection control unit detects the voltage of the electrical grid once a predetermined time period has elapsed since the detected result satisfied predetermined conditions, and disconnects from the electrical grid when the voltage has fallen below a predetermined threshold value as the voltage sag response operation.

4. The grid connecting device according to claim 2 or claim 3, wherein information is received specifying a type of dispersed power source as the voltage sag response information, and the voltage sag response operation is performed when the dispersed power source connected to the grid connecting device is the specified type of dispersed power source.

5. The grid connecting device according to claim 4, wherein the power-generating operation of the dispersed power source is stopped when disconnected from the electrical grid and the dispersed power source connected to the grid connecting device is the specified type of dispersed power source such as a fuel cell (FC), the grid connecting device not executing the stopping operation as the voltage sag response operation.

6. The grid connecting device according to claim 2 or claim 3, wherein the receiving unit receives voltage sag response information via different types of transmission paths.

7. A grid connecting system comprising a grid connecting device according to claim 1, and a grid management device generating voltage sag response information, and distributing the information to the grid connecting device.
